# EUROPEAN PATENT SPECIFICATION

(11) **EP 2 582 485 B1**
(45) Date of publication and mention of the grant of the patent: **06.05.2015**
(21) Application number: 10742580.3
(22) Date of filing: 18.06.2010
(51) Int. Cl.: B23K 11/00, B23K 37/047, B21F 27/20

(54) **METHOD FOR FEEDING INSTALLATIONS FOR AUTOMATICALLY FORMING OF ELECTRO-WELDED METAL NETS HAVING SPECIAL CONTOURED SHAPES WITH WHOLE BARS OR RODS OF STEEL IN THE LONGITUDINAL DIRECTION AND ASSOCIATED APPARATUS FOR SAID PRODUCTIONS**
VERFAHREN FÜR DIE VERSORGUNG VON ANLAGEN ZUR AUTOMATISCHEN HERSTELLUNG VON ELEKTROGESCHWEISSTEN METALLGITTERN MIT SPEZIELLEN KONTURIERTEN FORMEN MIT GANZEN EISENSTANGEN ODER -STÄBEN IN LÄNGSRICHTUNG SOWIE ZUGEHÖRIGE VORRICHTUNG FÜR DIESE HERSTELLUNG
PROCÉDÉ CONSISTANT À APPROVISIONNER DES INSTALLATIONS POUR LA FORMATION AUTOMATIQUE DE TREILLIS MÉTALLIQUES SOUDÉS À L'ARC PRÉSENTANT DES FORMES PROFILÉES SPÉCIALES EN BARRES OU TIGES ENTIÈRES EN ACIER DANS LA DIRECTION LONGITUDINALE ET APPAREIL ASSOCIÉ POUR LESDITES PRODUCTIONS

(43) Date of publication of application: 24.04.2013
(73) Proprietor: A.W.M. S.p.A., 33010 Magnano in Riviera (Udine) (IT)
(72) Inventor: BERNARDINIS, Claudio, I-33030 BUJA (Udine) (IT)
(74) Representative: Giugni, Valter
(86) International application number: PCT/IB2010/052773
(87) International publication number: WO 2011/158070

(56) References cited:
- EP-A1- 0 733 416
- WO-A1-98/51440
- US-A- 3 597 568

## Description

### Field of application

The present invention relates to a method for feeding installations for the automatic production of electro-welded metal nets having special contoured shapes with whole bars or rods of steel in a longitudinal direction, and to the associated apparatus for said productions. Contoured metal nets are used in the prefabricated building industry to manufacture walls, beams and modular elements. The invention simplifies the handling of the fed bars, since they are sized smartly monolithically and managed in relation to their position with respect to the contoured net to be formed, and therefore no segments are managed but only straight bars, which are optionally cut with adapted shears, proximate to the automated electric welding assembly, at the appropriate time in the correct position of the net which is in the process of being formed, i.e., before the step of mutual electric welding of said longitudinal elements to the transverse ones.

The invention, in addition to avoiding the handling of a plurality of small bars, termed segments, in relation to the forming of special nets, which are contoured along the perimeter and/or internally with empty regions, reduces the corresponding feed times and therefore the production times and also reduces waste with respect to known traditional methods.

The fed metal bars can have various diameters and are arranged along the entire width of the net to be formed, with spacings that are preset and of appropriate length, are used monolithically (as one body), have a maximum length that is equal to and/or shorter than the final length of the net, considering the missing parts of the contoured net with respect to a regular one of the rectangular type. Therefore, the longitudinal bars used that will constitute the contoured net will be monolithic, rectilinear, parallel, of various lengths in relation to the empty or solid regions in which they will form said net, and are cut automatically individually to size at the appropriate time during their advancement for forming.

### Background art

In the background art, for example in EP0733416, in the field of automated installations for forming flat electro-welded metal nets of a special type with perimetric contours and/or with internal voids, adapted for the construction of special metallic net-like reinforcement structures for the construction of prefabricated elements in the field of industrialized building, said contoured nets are known which are formed on a horizontal plane by arranging the various bars or rods of steel of different lengths, distinct segments, before electric welding. Therefore, to form a contoured metallic net it is necessary to feed in a longitudinal direction a plurality of bars in discontinuous segments, which are mutually spaced, or also whole bars to form the chosen contour. This causes a complication in the management and automatic handling of upstream magazines for the correct feeding and forming of the contoured net: it is in fact necessary to position exactly any bar segment, having a clearly defined diameter and length, at the right time in the advancement for forming said net. This production system is very slow and complicated in the management of the various rods.

Another known method is to provide the regular flat metal net, with meshes at chosen spacings, of the rectangular type, and then cut to shape according to the design plan, creating the desired voids. This method is quick in the forming of a rectangular net but is uneconomical, due to time wasted in providing the desired contours and due to net waste that is unlikely to be reusable.

Therefore, the present automated apparatus comes to the rescue in order to overcome the observed drawbacks; it ensures the operation for forming electro-welded metal nets that are contoured, both perimetrically and with internal voids, saving time in the management of the bars for feeding in a longitudinal direction and time for execution, at the same time avoiding process waste.

### Summary of the invention

The aim of the present invention is therefore to provide a new method and a corresponding machine or automated apparatus that uses various whole straight bars having different diameters and/or lengths in the longitudinal direction of the forming of flat electro-welded metal nets of a special type with perimetric contours and/or with internal voids, having the following and main characteristics:
- the metal bars for feeding in the longitudinal direction for forming the special net are positioned, so as to be parallel and with preset spacings, having identical or different diameters, each one whole or monolithic, equal in length to the sum of the parts of net to be formed (obviously subtracting the void parts of the contoured net), thereby avoiding immediately any waste of material;
- said bars are each moved in a longitudinal direction by an adapted transfer carriage provided with a plurality of automatic special grip clamps with independent actuation, and movement occurs toward the automated electric welding assembly;
- ahead of the electric welding assembly, in a fixed position, there are multiple automatic cutting devices, one for each longitudinal rod. This is done to interrupt the forward flow of the affected bar, thus forming the interruption or void required in the forming of the contoured electro-welded metal net;
- downstream of the automated electric welding assembly, for welding the longitudinal elements to the transverse ones, there is another transfer carriage, which is provided with a plurality of automatic clamps that grip the affected part of the net that has been formed and/or is which is in the process of being formed to draw it forward and evacuate it from the production line;
- the apparatus as a whole is enabled for actuation for the simultaneous synchronous forward advancement of a plurality of longitudinal whole bars, of all the ones provided or only of some so as to form the contours or voids continuously without interrupting the flow of the production of the special net. It is therefore provided with a bar transfer carriage upstream and another one downstream with respect to the service of the transverse automated electric welding assembly, all this working synchronously.

### Essence of the invention

The aim and objects of the invention are achieved according to the characteristics of the main claim and/or of any other claim given in this patent text by providing a new method for feeding longitudinal bars that can be applied in installations for forming electro-welded metal nets that are contoured or have special geometric shapes, and the associated apparatus for said productions.

The method is based first of all on the use of whole bars or rods of steel which are monolithic (not cut), arranged with preset spacings and longitudinally parallel in the direction for forming the contoured electro-welded metal nets, having specific lengths and/or thicknesses, in particular having a length that is equal to the maximum length of the net to be built and/or shorter, considering the voids of the contoured net that are not to be built.

The corresponding automated mechanical apparatus, managed with a computerized system, that performs the above cited method instead comprises two bar transfer carriages, one upstream and one downstream of the electric welding assembly, which is equipped upstream with a plurality of automatic shears, each of which operates on command on a single rod.

The present invention arranges in position, upstream of our apparatus, the rectilinear and parallel longitudinal bars, with preset spacings on a horizontal plane. They are gripped by a first transverse carriage, which operates below the working plane ahead of the transverse automatic electric welding assembly. This carriage is provided with a plurality of automatic individual clamps, each of which operates on a single longitudinal bar, so that the longitudinal bars provided upstream can all or partly be moved forward simultaneously. Said carriage moves on command from an upstream position to the shears assembly and vice versa.

To sum up, this carriage picks up the bars prepared upstream and moves them forward toward the automatic electric welding assembly, which is provided upstream with a plurality of shears, one for each rod, of the automatic type and operating on command individually. In this manner it is possible to cut any longitudinal bar at the desired instant, so as to prevent the advancement of the cut bar, thus forming the void in the forming of the contoured metal net. The advancement of the cut bar or bars can be resumed at any time, of course on command, with the retraction and/or subsequent advancement of the traction clamps mounted on said first upstream carriage.

Downstream of the electric welding assembly, which welds the longitudinal and transverse rods, forming the metal net, there is, above the plane for the working and transit of the formed net, a second transfer carriage. Said carriage is provided with a plurality of automatic clamps adapted to grip the net and move it forward synchronously at the same rate as the first upstream carriage.

Said downstream carriage also has the task of transferring the formed net into the region for evacuation from the plant for forming electro-welded metal nets. Both carriages operate synchronously with each other and with the various component assemblies of the present apparatus.

The invention advantageously meets the needs of the sector, providing a considerable simplification in the handling of the rods upstream, instead of managing a plurality of longitudinal segments to provide contoured metal nets, it manages individual whole bars of preset length to provide the entire net, since the necessary segments are cut on command from the whole bar an instant before they are electro-welded to the transverse rods. Also advantageously, the invention reduces the time for preparing and positioning the longitudinal rods upstream of the apparatus, avoids any waste, since each one of the preset whole longitudinal rods has the intended exact length, which is equal to the length of the entire net or of the sum of the various segments, considering the empty regions of said net.

### Description of drawings

One solution according to the present invention is shown by way of preferential but nonlimiting example in the accompanying six drawings, wherein:

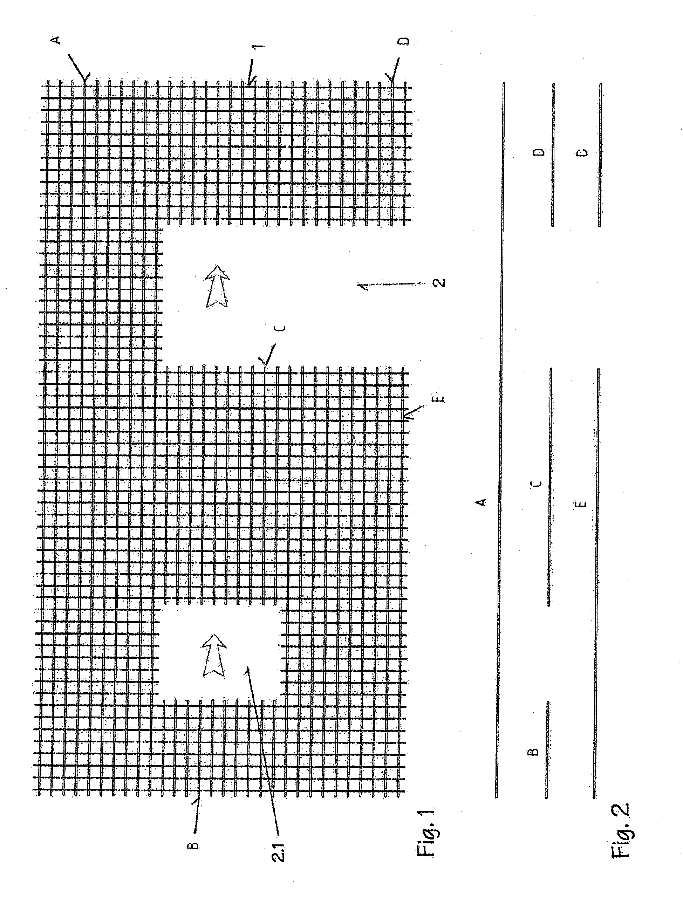

Figure 1 is a plan view of a special electro-welded metallic net, which is contoured and/or with voids, finished and complete with the transverse rods as well;
Figure 2 is a plan view of the various longitudinal rods required to form the net of Figure 1. They have various lengths, equal to those of the finished net, no less than five different rods in this example;

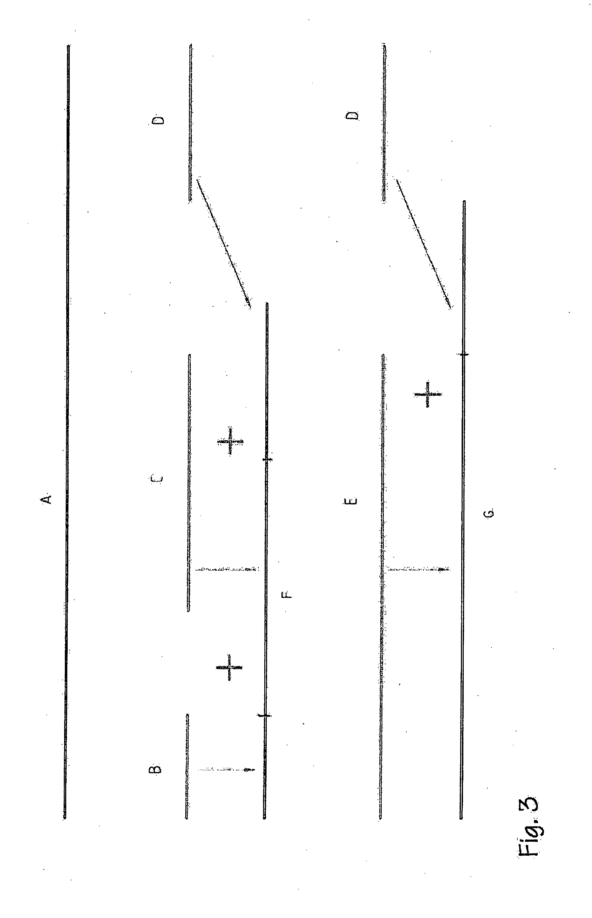

Figure 3 is a plan view of the same rods of the preceding figure, in which they are reduced to just three of the whole type, since they are the sum of the segments required to form the net. The reduction of whole rods simplifies upstream their management;

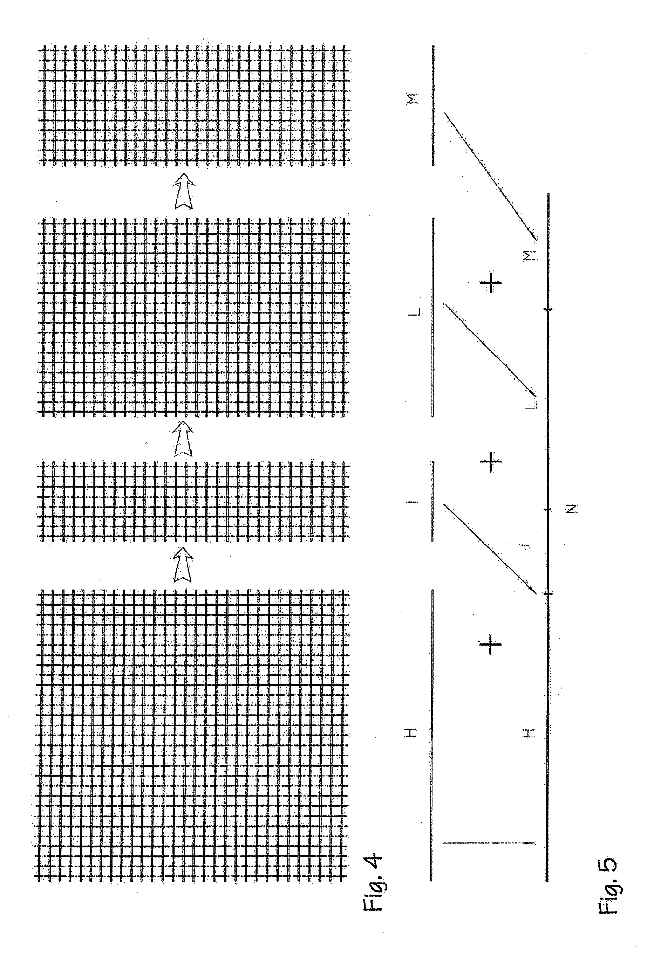

Figure 4 is a plan view of another example of forming of four distinct electro-welded metal nets of different lengths; in this case also, instead of using four types of bar segments, straight bars are used whose length is equal to their sum, simplifying in this case also their upstream management;
Figure 5 is a schematic view of the various bars required to provide the four nets of the preceding figure; in fact, instead of using four distinct segments, one uses, with the present method, a single whole bar whose length is equal to the sum of the four segments needed;

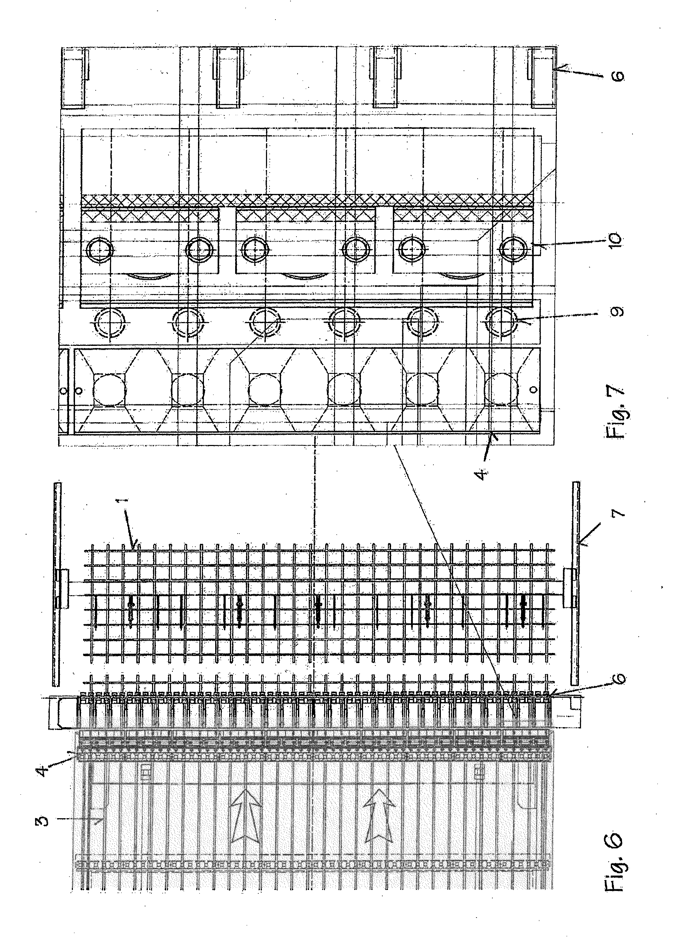

Figure 6 is a partial plan view of a plant for forming the electro-welded metal nets in the region upstream and downstream of the multiple automatic electric welding assembly;
Figure 7 is an enlarged-scale plan view of the region upstream of the automatic electric welding assembly, highlighting the first transfer carriage or the automatic grip clamps, the retainer for the individual bars and the cutting tools ahead of the electric welding assembly;

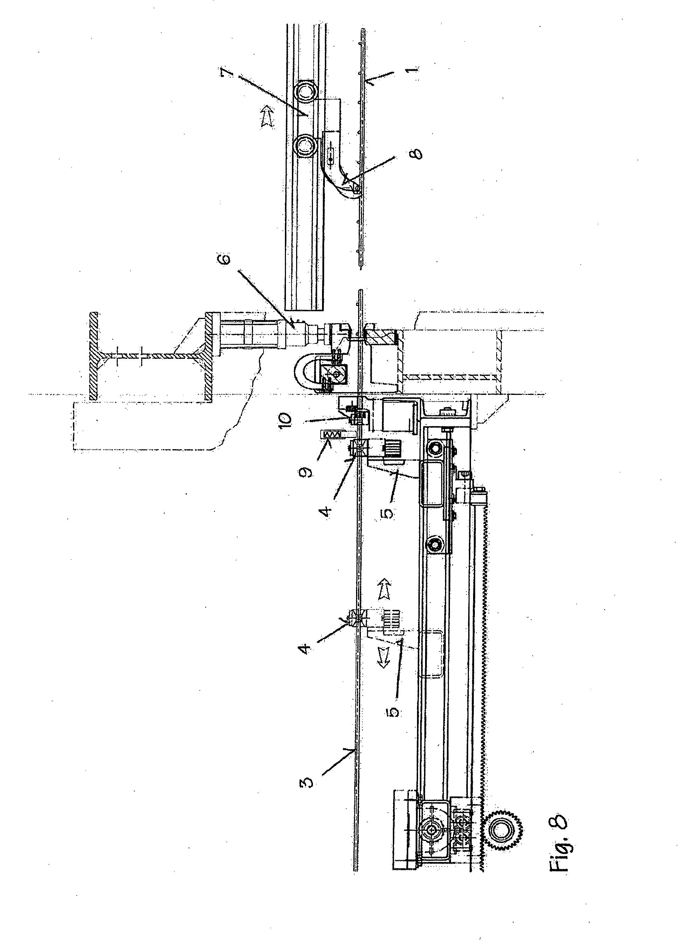

Figure 8 is a side view of the automated mechanical apparatus for performing the method for feeding the longitudinal bars, upstream of the electric welding assembly, highlighting the first feeder carriage below the working plane and the second transfer carriage downstream of the multiple electric welding assembly that operates above the working plane; the retainer of the bar during the step for cutting the longitudinal rods on the part of the respective cutting assembly and the automatic electric welding assembly are also visible;

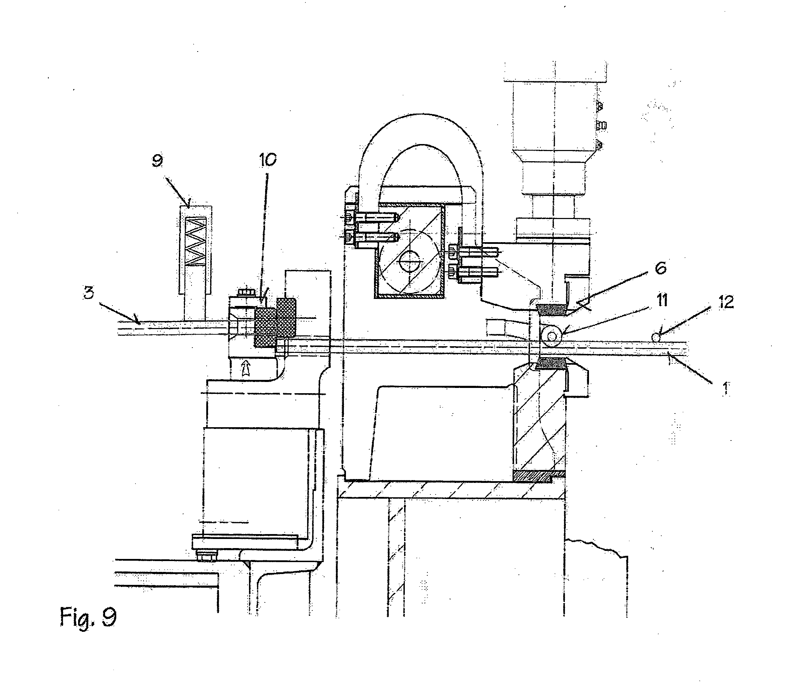

Figure 9 is again a side view, in enlarged scale, of the region of the multiple automatic electric welding assembly, and upstream thereof, of the device for feeding the transverse rods, further upstream the automatic shears for cutting the longitudinal rods, with an upward thrust from below, and even further upstream the device for retaining said rod, which is activated during the step for cutting said rod.

As can be seen from the various figures, the method used in feeding the longitudinal rods for forming electro-welded metal nets 1 is based first of all on the use of bars or rods made of steel, which are rectilinear and parallel in the longitudinal direction of the devising of special nets, which are contoured perimetrically and/or with internal voids, not in segments B, C, D, E but in whole bars with a total length A equal to the length of the net to be built and/or to the sum E, F, G of the various parts, taking into account any voids 2, 2.1 in the various regions of said special net.

Furthermore, a second possible solution is shown which relates to the case of the construction of four metallic nets which are normal but have different lengths, H, I, L, M. In this case also, the quantity of segments for each individual net is multiple, so that management of feeding is very complex: this is simplified by using whole longitudinal bars with a length N, equal to the sum of the individual lengths H, I, L, M.

Therefore, in order to perform the method according to the invention, the following automated apparatus has been conceived which is capable of acting on the individual longitudinal bars 3 for forming the special net 1. It comprises a first transfer carriage 5, which is transverse with respect to the direction of forming of the metallic net, and is provided with a plurality of automatic clamps 4, each operating on the individual steel rod. It works below the working plane and upstream with respect to the multiple automatic electric welding assembly 6, which is always transverse to the direction of the longitudinal rod 3. Again upstream of this last assembly there is: the device 11 for inserting the transverse rods 12; the multiple assembly of shears 10 with a vertically movable cutting tool, each automatic cutter acting on a single longitudinal rod with independent actuation; and finally, for each upstream shears, a retainer 9 for the rod 3, which is provided with an elastic contrast spring or with another equivalent device (pneumatic system, magnetic system, etc) with downward thrust to reposition the rod if cut. Downstream of the automatic electric welding assembly 6 there is a second transfer carriage 7, which also is mounted transversely to the net forming direction, on two lateral shoulders, acts above the horizontal working plane, and is provided with a plurality of automatic grip clamps 8 that are adapted to grip the formed net 1 and to transfer it to an evacuation region. Both carriages operate synchronously with each other and with the other assemblies that compose the present apparatus.

Advantageously, the method allows to handle whole bars in the longitudinal direction of formation of the special and/or traditional net, without managing individual segments, simplifying considerably the automation of the feeding of the automatic plant.

The invention is of course not limited to the examples of embodiment of the apparatus that performs the described method, starting from which it is possible to provide other embodiments and methods of execution, and the details of execution may vary in any case without thereby abandoning the scope of the claims.

## Claims

1. A method for feeding installations for the automatic forming of electro-welded metal nets having special contoured shapes, which are perimetric and/or with internal openings, composed originally of rods or bars made of steel in a longitudinal direction, whereby
- it provides for the use, for loading in a longitudinal direction, of individual bars (3) that have specific lengths, in relation to their position on the working plane in the forming of the special contoured net (1), equal to the total length of the net to be built and/or to the sum of the segments of rods required, considering the geometric openings of said net,
- downstream of the automated electric welding assembly, for welding the longitudinal elements to the transverse ones, there is a transfer carriage, which is provided with a plurality of automatic clamps that grip the affected part of the net that has been formed and/or is which is in the process of been formed to draw it forward and evacuate it from the production line, **characterised in that**
- the metal bars are each moved in a longitudinal direction by another adapted transfer carriage provided with a plurality of automatic special grip clamps with independent actuation, and movement occurs toward the automated electric welding assembly,
- ahead of the electric welding assembly, in a fixed position, there are multiple automatic cutting devices, one for each longitudinal rod and each with an independent actuation,
- the apparatus as a whole is enabled for actuation for the simultaneous synchronous forward advancement of a plurality of longitudinal bars.

2. The method for feeding installations for forming special metal nets according to claim 1, **characterized in that** said individual longitudinal bars (A, F, G, N) are optionally cut to size automatically an instant before electric welding to the transverse rods (12), so that the downstream transfer allows the remaining part of the net (1) to advance, thus forming the opening or discontinuity of the continuous net **in that** preset point.

3. An automated apparatus for performing the method according to the two preceding claims, **characterized in that** it comprises:
- a longitudinal bar transfer carriage (5), upstream of the automatic electric welding assembly (6), which is arranged transversely to the direction of the forming of the metal net, provided with a plurality of automatic clamps (4) which are actuated independently, equal in number to the rods to be moved, each one therefore operating on the respective rod, transferring it synchronously forward from an alignment and cutting position for feeding up to said electric welding assembly;
- an assembly (10) for automatic cutting of the longitudinal bars, which is also transverse and fixed upstream of the electric welding assembly (6), which is provided with a plurality of automatic shears, one for each longitudinal rod, with independent automatic actuation;
- an assembly (11) for automatic insertion of transverse rods (12);
- an automatic electric welding assembly (6), which is transverse to the direction of advancement of the special net which is in the process of being formed; a carriage (7) for the transfer of the formed special net (1), downstream of the electric welding assembly (6), provided with a plurality of automatic clamps (8) that are capable of gripping the net and transferring it forward, operating synchronously with the movement of the upstream carriage (5) and with the electric welding assembly.

4. The automated apparatus according to claim 3, **characterized in that** the carriage (5), upstream with respect to the electric welding assembly (6), works below the horizontal working and transit plane of the longitudinal rods (A, F, G, N).

5. The automated apparatus according to claim 3, **characterized in that** the carriage (7), downstream with respect to the electric welding assembly (6), works above the horizontal plane for working and forming the contoured net (1).

6. The automated apparatus according to claim 3, **characterized in that** each automatic shears (10), since it operates with the movable cutting tool in a vertical direction upward from below, is provided with a retention device (9) with an elastic spring for contrasting vertical movement during the action for cutting the affected rod, and/or with other equivalent retention devices, for example of the pneumatic and/or magnetic type.

## Patentansprüche

1. Verfahren für eine Zuführanlage zur automatischen Herstellung von elektrogeschweißten Metallgittern mit speziellen konturierten Formen entlang des Umfangs und/oder mit internen Öffnungen, die ursprünglich aus in einer Längsrichtung ausgerichteten Stangen oder Stäben aus Stahl bestehen, wobei
- für die Verwendung für das Laden in einer Längsrichtung einzelne Stäbe (3) mit spezifischen Längen in Bezug auf ihre Position in der Arbeitsebene während der Herstellung des speziellen konturierten Gitters (1) in Entsprechung zu der Gesamtlänge des herzustellenden Gitters und/oder der Summe der erforderlichen Stangensegmente unter Berücksichtigung der geometrischen Öffnungen des Gitters vorgesehen werden,
- nachgeordnet zu der automatisierten Elektroschweißanordnung für das Schweißen der Längselemente an die Querelemente ein Transportschlitten vorgesehen ist, der mit einer Vielzahl von automatischen Klauen versehen ist, die den betreffenden Teil des Gitters greifen, der bereits hergestellt wurde und/oder gerade hergestellt wird, um diesen nach vorne zu ziehen und aus der Produktionslinie herauszuführen,
**dadurch gekennzeichnet, dass**:
- die Metallstäbe jeweils in einer Längsrichtung durch einen anderen Transportschlitten bewegt werden, der mit einer Vielzahl von automatischen speziellen Greifklauen versehen ist, die unabhängig betätigt werden, wobei die Bewegung zu der automatisierten Elektroschweißanordnung hin erfolgt,
- vorgeordnet zu der Elektroschweißanordnung an einer fixen Position mehrere automatische Schneideeinrichtungen vorgesehen sind, wobei jeweils eine Schneideeinrichtung für jede Längsstange vorgesehen ist und jede Schneideeinrichtung unabhängig betätigt weden kann,
- die Vorrichtung insgesamt zu einer Betätigung für einen gleichzeitigen und synchronen Vorschub einer Vielzahl von Längsbalken befähigt ist.

2. Verfahren für eine Zuführanlage zur Herstellung von speziellen Metallgittern nach Anspruch 1, **dadurch gekennzeichnet, dass** die einzelnen Längsstäbe (A, F, G, N) optional unmittelbar vor dem Elektroschweißen an die Querstangen (12) automatisch zugeschnitten werden, sodass der nachgeordnet erfolgende Transport einen Vorschub des verbleibenden Teils des Gitters (1) ermöglicht, wodurch eine Öffnung oder Diskontinuität des kontinuierlichen Gitters an diesem voreingestellten Punkt ausgebildet wird.

3. Automatisierte Vorrichtung zum Durchführen des Verfahrens gemäß den zwei vorstehenden Ansprüchen, **gekennzeichnet durch**:
- einen Längsbalken-Transportschlitten (5), der vorgeordnet zu der automatischen Elektroschweißanordnung (6) quer zu der Richtung für das Herstellen des Metallgitters angeordnet ist und mit einer Vielzahl von automatischen Klauen (4) versehen ist, die unabhängig betätigt werden können und deren Anzahl den zu bewegenden Stangen entspricht, wobei jeweils eine der automatischen Klauen an einer entsprechenden Stange betätigt wird und diese von einer Ausrichtungs- und Schneideposition synchron nach vorne transportiert, um sie zu der Elektroschweißanordnung zuzuführen,
- eine Anordnung (10) zum automatischen Schneiden der Längsbalken, die ebenfalls quer und vorgeordnet zu der Elektroschweißanordnung (6) fixiert ist und mit einer Vielzahl von automatischen Scheren versehen ist, wobei jeweils eine Schere für jede Längsstange vorgesehen ist und unabhängig automatisch betätigt werden kann,
- eine Anordnung (11) für das automatische Einführen von Querstangen (12),
- eine automatische Elektroschweißanordnung (6), die quer zu der Vorschubrichtung des gerade hergestellten speziellen Gitters angeordnet ist, und
- ein Schlitten (7) für den Transport des hergestellten speziellen Gitters (1), der nachgeordnet zu der Elektroschweißanordnung (6) ist und mit einer Vielzahl von automatischen Klauen (8) versehen ist, die das Gitter greifen und nach vorne transportieren können, wobei dieser Betrieb synchron mit der Bewegung des vorgeordneten Schlittens (5) und mit der Elektroschweißanordnung erfolgt.

4. Automatisierte Vorrichtung nach Anspruch 3, **dadurch gekennzeichnet, dass** der Schlitten (5), der vorgeordnet zu der Elektroschweißanordnung (6) ist, unter der horizontalen Arbeits- und Durchgangsebene der Längsstangen (A, F, G, N) tätig ist.

5. Automatisierte Vorrichtung nach Anspruch 3, **dadurch gekennzeichnet, dass** der Schlitten (7), der nachgeordnet zu der Elektroschweißanordnung (6) ist, über der horizontalen Ebene für das Bearbeiten und Herstellen des konturierten Gitters (1) tätig ist.

6. Automatisierte Vorrichtung nach Anspruch 3, **dadurch gekennzeichnet, dass** jede der automatischen Scheren (10), weil sie zusammen mit dem beweglichen Schneidwerkzeug in einer vertikalen Richtung von unten nach oben betätigt wird, mit einer Halteeinrichtung (9) mit einer elastischen Feder für eine kontrastierende vertikale Bewegung während der Betätigung für das Schneiden der betreffenden Stange und/oder mit anderen äquivalenten Halteeinrichtungen beispielsweise des pneumatischen und/oder magnetischen Typs versehen ist.

## Revendications

1. Procédé pour approvisionner des installations pour l'assemblage automatique de filets métalliques soudés à l'arc électrique présentant des formes profilées spéciales, qui sont périmétriques et/ou avec des vides internes, initialement composées de tiges ou de barres faites en acier dans une direction longitudinale, dans laquelle
- il est prévu le chargement dans une direction longitudinale, des barres individuelles (3) qui ont des longueurs spécifiques, par rapport à leur position sur le plan de travail de formation du filet spécial profilé (1), égale à la longueur totale du filet à construire et/ou à la somme des segments de barres nécessaires, en tenant compte des vides géométriques dudit filet,
- en aval de l'assemblage automatique par soudage électrique, pour le soudage des éléments longitudinaux aux éléments transversaux, il y a un chariot de transfert, qui est pourvu d'une pluralité de pinces automatiques qui saisissent la partie concernée du filet qui a été formé et/ou qui est en train d'être formé pour le tirer vers l'avant et l'évacuer de la ligne de production, **caractérisé en ce que**
- les barres métalliques sont chacune déplacées dans une direction longitudinale par un autre chariot de transfert adapté et muni d'une pluralité de pinces de préhension spéciales automatiques avec une commande indépendante, et un déplacement se produit vers l'assemblage automatique par soudage électrique,
- devant l'assemblage par soudage électrique, dans une position fixe, se présentent plusieurs dispositifs de coupe automatique, un pour chaque tige longitudinale et chacun avec une commande indépendante,
- l'appareil dans son ensemble est activé pour la commande de déplacement en avant d'une pluralité de barres longitudinales de manière synchrone et simultané.

2. Procédé pour approvisionner des installations pour former des filets métalliques spéciaux selon la revendication 1, **caractérisé en ce que** lesdites barres longitudinales individuelles (A, F, G, N) sont éventuellement automatiquement coupées à la taille un instant avant le soudage électrique des barres transversales (12), de sorte que le transfert en aval permet de faire avancer la partie restante du filet (1), formant ainsi le vide ou la discontinuité du filet continu en ce point prédéfini.

3. Appareil automatisé pour réaliser le procédé selon l'une des deux revendications précédentes, **caractérisé en ce qu'**il comprend :
- un chariot de transfert (5) de la barre longitudinale, en amont de l'assemblage automatique par soudage électrique (6), qui est disposé transversalement à la direction de formation du filet métallique, pourvu d'une pluralité de pinces(4) automatiques qui sont commandées indépendamment, égales en nombre aux tiges à déplacer, chacune fonctionnant par conséquent sur la tige respective, la transférant de manière synchrone vers l'avant depuis une position d'alignement et de coupe pour approvisionner ledit assemblage par soudage électrique;
- un ensemble (10) pour la découpe automatique des barres longitudinales, qui est également transversal et fixé en amont de l'assemblage par soudage électrique (6), qui est pourvu d'une pluralité de cisailles automatiques, une pour chaque barre longitudinale, avec une commande automatique indépendante ;
- un ensemble (11) pour l'insertion automatique de barres transversales (12);
- un assemblage automatique par soudage électrique (6), qui est transversale à la direction d'avancement du filet spécial qui est en train d'être formé;
- un chariot (7) pour le transfert du filet spécial formé (1), en aval de l'assemblage par soudage électrique (6), muni d'une pluralité de pinces automatiques (8) qui sont capables de saisir le filet et le transférer vers l'avant, fonctionnant de manière synchrone avec le mouvement du chariot en amont (5) et de l'assemblage par soudage électrique.

4. Appareil automatisé selon la revendication 3, **caractérisé en ce que** le chariot (5), en amont par rapport à l'assemblage par soudage électrique (6), fonctionne au-dessous du plan horizontal de travail et de transport des tiges longitudinales (A, F, G, N).

5. Appareil automatisé selon la revendication 3, **caractérisé en ce que** le chariot (7), en aval par rapport à l'assemblage de soudage électrique (6), fonctionne au-dessus du plan horizontal de travail et de formation du filet profilé (1).

6. Appareil automatisé selon la revendication 3, **caractérisé en ce que** chaque cisaille automatique (10), étant donné qu'il fonctionne avec l'outil de coupe déplaçable dans une direction verticale de bas en haut, est pourvue d'un dispositif de retenue (9) avec un ressort élastique pour compenser le mouvement vertical se produisant pendant l'action de coupe de la tige concernée, et/ou avec d'autres dispositifs de retenue équivalents, par exemple du type pneumatique et/ou magnétique.
